# EUROPEAN PATENT APPLICATION

(11) **EP 4 566 991 A1**
(43) Date of publication of application: **11.06.2025**
(21) Application number: 24217655.0
(22) Date of filing: 05.12.2024
(51) Int. Cl.: C01C 1/04, B01J 8/02, B01J 8/04

(54) **AMMONIA SYNTHESIS SYSTEM**

(30) Priority: 06.12.2023 KR 20230175530
(71) Applicant: SK Innovation Co., Ltd., Seoul 03188 (KR)
(72) Inventor: LEE, Jun Young, Daejeon 34124 (KR); SONG, Da Eun, Daejeon 34124 (KR); IM, Ju Hwan, Daejeon 34124 (KR); JEONG, Jae Hun, Daejeon 34124 (KR); KIM, Sun Kug, Daejeon 34124 (KR); KIM, Ye Jin, Daejeon 34124 (KR)
(74) Representative: Prüfer & Partner mbB Patentanwälte · Rechtsanwälte

(57) **Abstract**

Provided is an ammonia synthesis system including an ammonia synthesis reactor; two or more catalyst beds; a distribution plate; a backflow prevention plate; a distribution device; and mixed gas supply lines, wherein the distribution plate has a plurality of openings formed independently of each other, and a percentage of a total region of the openings to a total region of each distribution plate is referred to as an opening ratio, wherein the opening ratio of the distribution plate is decreased toward a lower part.

## Description

### TECHNICAL FIELD

The present disclosure generally relates to an ammonia synthesis system and a method for ammonia synthesis.

### BACKGROUND

There is an increasing need for renewable energy to achieve a greenhouse gas reduction to cope with climate change and depletion of oil resources. However, regions that meet an appropriate condition for renewable energy production are scattered, and it is thus essential to find means for storing and transporting renewable energy. For example, renewable energy, which is abundant in the equatorial and southern hemisphere regions, is required to be transported to the northern hemisphere where renewable energy is in high demand.

In addition, renewable energy is not stable and may vary from time to time. Due to its rather high temporal variability, effective use of renewable energy requires storage devices for storing electricity produced by renewable power sources. Ammonia is spotlighted as an energy carrier to solve the problems occurring from the area ubiquity and temporal variability of renewable energy. In particular, ammonia may be liquefied at room temperature and at pressures around 8.5 atmospheres, and thus may be stored and transported more easily than hydrogen. Therefore, as an alternative to solve the problems occurring from the area ubiquity and temporal variability of renewable energy, a method of synthesizing ammonia is being developed, which is produced from hydrogen and nitrogen as reactants using electricity produced from renewable energy.

For example, hydrogen, one of the main raw materials for the ammonia synthesis, may be produced by a water electrolyzer powered by renewable energy such as solar or wind energy. One issue that needs to be addressed is that renewable energy, such as, for example, solar energy or wind energy is not constant or available at all times. Therefore, the amount of hydrogen (e.g., flow rate) provided by a process using renewable solar or wind energy may vary or fluctuate significantly and, hence, an ammonia synthesis system using such hydrogen cannot be operated at a constant flow rate. Such changes may have a negative impact on the overall efficiency of the ammonia synthesis system.

In addition, flow rate distribution upstream of a catalyst bed included in an ammonia synthesis reactor may be improved. A flow rate of the raw material such as hydrogen fed into the ammonia synthesis system may decrease or increase. In particular, in multi-stage catalyst beds, the raw material may not sufficiently reach the lowest catalyst bed, which lowers reaction performance and shortens a replacement cycle.

In addition, in a conventional ammonia synthesis system, a temperature deviation may occur between the central and outer parts of the catalyst bed especially at the beginning of its operation, which may reduce an ammonia synthesis yield.

Therefore, there is a need for an ammonia synthesis system which can operate efficiently with hydrogen from a renewable energy process. The ammonia synthesis system will need to be able to cope with the changes in the flow rate that occur during the production cycle, while at the same time solving the problems of the non-uniform flow rate distribution that occurs upstream of the catalyst bed and the reduced ammonia synthesis yield caused by the temperature deviation between the central and outer parts of the catalyst bed at the beginning of the operation.

### SUMMARY

An embodiment of the present disclosure relates to an ammonia synthesis system which efficiently deals with and reacts to changes that may occur in a flow rate during a production cycle.

Another embodiment of the present disclosure relates to an ammonia synthesis system which may improve reaction performance of a catalyst bed by maintaining a uniform flow rate distribution upstream of the catalyst bed included in an ammonia synthesis reactor even when a flow rate of a raw material, such as hydrogen, fed into the ammonia synthesis system is decreased, and supplying mixed gas for the gas to pass through only the minimum catalyst bed.

Another embodiment of the present disclosure relates to an ammonia synthesis system which may improve reaction performance of a catalyst bed by supplying mixed gas to pass through two or more catalyst beds even when a flow rate of a raw material, such as hydrogen, fed into the ammonia synthesis system is increased.

Still another embodiment of the present disclosure relates to an ammonia synthesis system which may improve an ammonia synthesis yield by reducing or preventing a temperature deviation between a central and outer parts of a catalyst bed at the beginning of its operation.

Yet another embodiment of the present disclosure relates to an ammonia synthesis system which may improve an ammonia synthesis yield at the beginning of its operation by preheating a catalyst bed at the beginning of its operation.

Yet another embodiment of the present disclosure relates to an ammonia synthesis system which may save energy by optimizing an amount of energy required by the system during its operation.

Yet another embodiment of the present disclosure relates to an ammonia synthesis system which may increase a catalyst replacement cycle by uniformly using each catalyst bed during the operation.

According to one embodiment of the present disclosure, provided is an ammonia synthesis system including an ammonia synthesis reactor; two or more catalyst beds included in the ammonia synthesis reactor; a distribution plate disposed upstream from each of the catalyst beds; a backflow prevention plate disposed downstream from each of the catalyst beds, optionally except for the catalyst bed disposed at the lowest of the two or more catalyst beds, for preventing a backflow of mixed gas; a distribution device disposed upstream from each of the distribution plates for distributing the mixed gas to the distribution plate; and mixed gas supply lines arranged to supply the mixed gas to the respective distribution devices, wherein the distribution plate has a plurality of openings formed independently of each other, and when a percentage of a total area of the openings to a total area of each distribution plate is referred to as an opening ratio, the opening ratio of the distribution plate is decreased toward a lower part.

A top distribution plate of the distribution plates is referred to as an upper distribution plate, and an opening ratio Aₜ of the upper distribution plate may be more than 40%.

A bottom distribution plate of the distribution plates is referred to as a lower distribution plate, and an opening ratio A_{b} of the lower distribution plate may be less than 20%.

When three distribution plates are provided, a middle distribution plate among the distribution plates is referred to as a middle distribution plate, and an opening ratio Aₘ of the middle distribution plate may be 20 to 40%.

The system may further include a plurality of mixed gas flow pipes which are fixed to a lower surface of at least one of the distribution plates and through which the mixed gas flows.

The mixed gas flow pipe may have a bottom surface and a side surface connecting the bottom surface with the distribution plate, a plurality of upper apertures may be formed in a side surface of an upper part of the mixed gas flow pipe spaced apart from each other along a circumference of the mixed gas flow pipe, a plurality of middle apertures may be formed in a side surface of a middle part of the mixed gas flow pipe spaced apart from each other along the circumference, a plurality of lower apertures may be formed in a side surface of a lower part of the mixed gas flow pipe spaced apart from each other along the circumference, and the mixed gas flow pipe may optionally include a side cover surrounding at least some regions of the side surface of the mixed gas flow pipe to provide a space for a fluid flowing out of the side surface of the mixed gas flow pipe after passing through the upper aperture to be guided toward the middle aperture. Optionally the mixed gas flow pipe further includes a separator plate dividing the upper and middle parts of the mixed gas flow pipe from each other.

The system may further include a microwave heating device for emitting microwaves to the catalyst bed.

Each of the mixed gas supply lines may include a flow regulating device.

Each of the backflow prevention plates may include a plurality of openings, and each of the plurality of openings included in each of the backflow prevention plates may have a backflow prevention cap selectively opened based on a flow direction of the gas.

The backflow prevention cap may be coupled to a hinge spring disposed at a position on each circumference part of the plurality of openings formed in each of the backflow prevention plates.

A coupling part of the hinge spring may apply an elastic force in a direction in which the backflow prevention cap approaches the distribution plate.

The system may further include a heat exchanger disposed downstream from the catalyst bed to remove heat from an effluent of the catalyst bed.

The distribution device may have a disk shape. In another embodiment the distribution device may have a toroidal shape.

Ammonia may be synthesized in the ammonia synthesis system at 10 to 300 bar in a respective ammonia production method.

Ammonia may be synthesized in the ammonia synthesis system at 200 to 700°C bar in a respective ammonia production method.

In one embodiment, provided is an ammonia synthesis system comprising: a mixed gas supply line providing mixed gas including hydrogen generated from a process using renewable energy to an ammonia synthesis reactor; the ammonia synthesis reactor; a first and a second catalyst bed included in the ammonia synthesis reactor; a first distribution plate disposed upstream from the first catalyst bed; a second distribution plate disposed upstream from the second catalyst bed; a first backflow prevention plate disposed downstream from the first catalyst bed for preventing a backflow of mixed gas; a first distribution device disposed upstream from the first distribution plate for distributing a mixed gas feed to the first distribution plate; a second distribution device disposed upstream from the second distribution plate for distributing a mixed gas flow exiting the first catalyst bed to the second distribution plate; wherein each distribution plate has a plurality of openings, and wherein an opening ratio of the second distribution plate is lower than an opening ratio of the first distribution plate.

Other features and aspects of the embodiments of the present disclosure will become apparent to those with ordinary skill in the art from the following detailed description, the drawings, and the claims.

### BRIEF DESCRIPTION OF THE DRAWINGS

FIG. 1 is a simplified schematic side cross-sectional view showing an ammonia synthesis system according to an embodiment of the present disclosure.
FIG. 2 is a simplified schematic side cross sectional view showing an ammonia synthesis system according to another embodiment of the present disclosure.
FIG. 3 is a perspective view showing an upper distribution plate and a mixed gas flow pipe according to an embodiment of the present disclosure.
FIG. 4 is a perspective view showing the inside of the mixed gas flow pipe according to an embodiment of the present disclosure.
FIG. 5 is a perspective view showing the inside of a mixed gas flow pipe according to another embodiment of the present disclosure.
FIG. 6 is a view showing a state where a backflow prevention cap of a backflow prevention plate is closed according to an embodiment of the present disclosure.
FIG. 7 is a view showing a state where the backflow prevention cap of the backflow prevention plate is opened according to an embodiment of the present disclosure.
Fig. 8 is a perspective view showing a middle distribution plate according to an embodiment of the present disclosure.
Fig. 9 is a perspective view showing a lower distribution plate according to an embodiment of the present disclosure.

### DETAILED DESCRIPTION

Various advantages and features of the present disclosure and methods for accomplishing the same are apparent from embodiments described in detail below. However, the embodiment so the present disclosure are not limited to the embodiments disclosed below, and may be implemented in various different forms. These embodiments are provided only to make the present disclosure complete and allow those skilled in the art to completely appreciate the scope of the present disclosure.

Unless defined otherwise, all terms (including technical and scientific terms) used in the specification have the same meanings as meanings commonly understood by those skilled in the art to which the present disclosure pertains.

A term of a singular number used in the specification may be interpreted as including its plural number unless otherwise indicated.

A numerical range used in the specification may include the lower and upper limits and all values within that range, increments logically derived from the shape and width of the defined range, all values delimited by those limits, and all possible combinations of the upper and lower limits of a numerical range delimited by different shapes. The defined numerical range may also include values outside the numerical range, which may occur due to experimental errors or rounding of values unless otherwise specified in the specification.

A term "to include" or "to comprise" in the specification is a comprehensive description that has the meaning equivalent to an expression such as "to include", "to contain", "to comprise" "to have", or "to be featured", and does not exclude an element, a material, or a process that is not additionally enumerated.

The terms "upper", "middle" and "lower", or "lowest" or "lowermost" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

Unless otherwise indicated, a unit of % used in the specification may indicate % by weight.

In the specification, "A to B" indicates "A or more and B or less" unless otherwise specifically defined.

When an element such as a layer, a film, a region, and area or a board is referred to as being "on" or "above" another element in the specification, the element may be "directly on" another element or may have a third element interposed therebetween.

When a component such as a layer, a film, a region, an area, a board, or a member is referred to as being on "one surface" or "one side" of another component in the specification, the component may be in direct contact with another component or may have a third component interposed therebetween.

Hereinafter, an ammonia synthesis system of the present disclosure is described in detail. However, note that the embodiments are only illustrative , therefore, the present disclosure is not limited to the specific embodiments described.

An embodiment of the present disclosure provides an ammonia synthesis system including an ammonia synthesis reactor; two or more catalyst beds included in the ammonia synthesis reactor; a distribution plate disposed upstream from each of the catalyst beds; a backflow prevention plate disposed downstream from each of the catalyst beds, optionally except for the catalyst bed disposed at the lowest of the two or more catalyst beds, for preventing a backflow of mixed gas; a distribution device disposed upstream from each of the distribution plates for distributing the mixed gas to the distribution plate; and mixed gas supply lines arranged to supply the mixed gas to the respective distribution devices.

In the ammonia synthesis system according to a specific embodiment, the distribution plate may have a plurality of openings formed independently of each other. A percentage of a total area of the openings to a total area of each distribution plate is referred to as an opening ratio. The opening ratio of the distribution plate may be decreased toward a lower part.

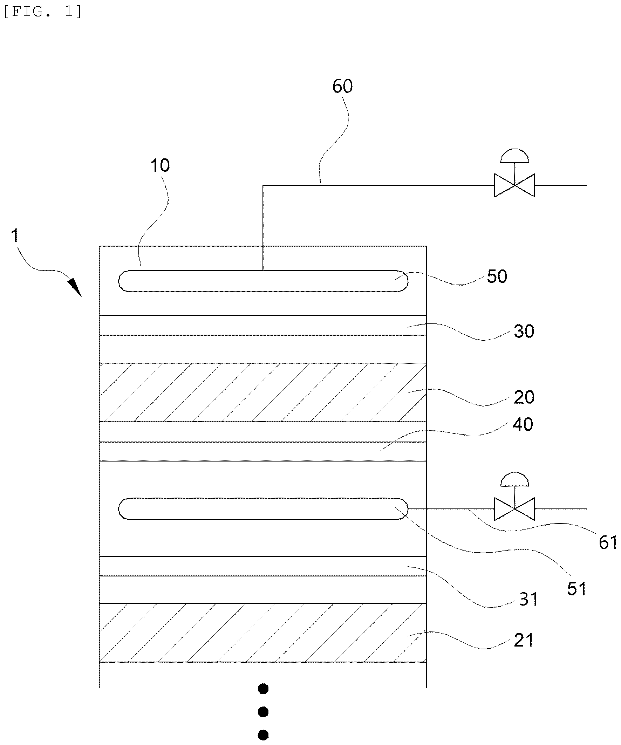

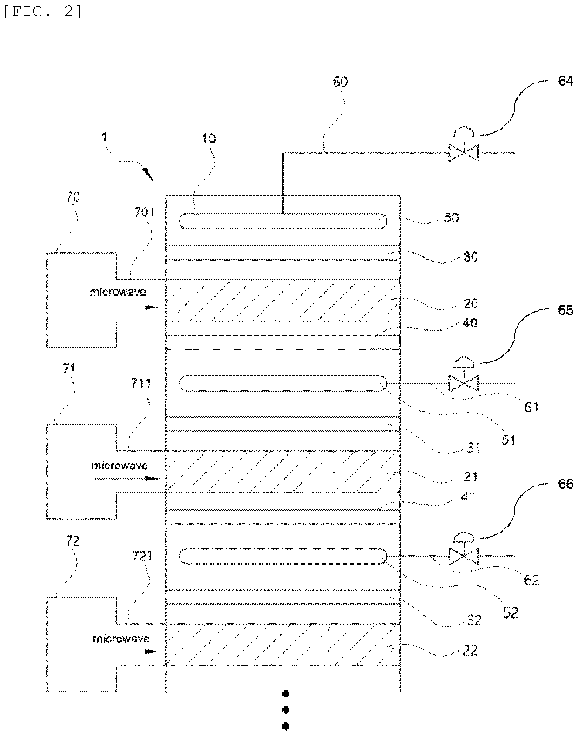

Referring to FIGS. 1 and 2, according to an embodiment of the present disclosure, there is provided an ammonia synthesis system 1 including an ammonia synthesis reactor 10; catalyst beds 20, 21, and 22 included in the ammonia synthesis reactor 10; a distribution plate 30, 31, or 32 disposed upstream from each of the catalyst beds; a backflow prevention plate 40 or 41 disposed downstream from each of the catalyst beds except for the catalyst bed disposed at the lowest of the two or more catalyst beds 20, 21, and 22 for preventing the backflow of the mixed gas; a distribution device 50, 51, or 52 disposed upstream from each of the distribution plates 30, 31, and 32 and distribute the mixed gas to the distribution plate 30, 31, or 32; and mixed gas supply lines 60, 61, and 62 arranged to supply the mixed gas to the distribution devices 50, 51, and 52, wherein the distribution plate 30, 31, or 32 has a plurality of openings 301, 311, and 321 formed independently of each other.

Hereinafter, the ammonia synthesis system including the two catalyst beds may be described as an embodiment of the ammonia synthesis system 1 of the present disclosure. The ammonia synthesis system according to an embodiment of the present disclosure may include the two or more catalyst beds, for example, three, four, five, seven, eight, nine, or ten catalyst beds.

As shown in FIG. 1, an ammonia synthesis system including two catalyst beds, according to an embodiment of the present disclosure may include an upper catalyst bed 20 and a lower catalyst bed 21; an upper distribution plate 30 and a lower distribution plate 31 each disposed upstream from the upper and lower catalyst beds respectively; the backflow prevention plate 40 preventing the backflow of the mixed gas; the distribution device 50 or 51 distributing the mixed gas to the distribution plate 30 or 31; and the mixed gas supply lines 60 and 61 arranged to supply the mixed gas to the distribution devices 50 and 51, wherein the distribution plate 30 or 31 has the plurality of openings 301 and 311 formed independently of each other. The percentage of the total area of the openings to the total area of each distribution plate is referred to as the opening ratio, and the opening ratio of the upper distribution plate 30 is greater than the opening ratio of the lower distribution plate 31.

The ammonia synthesis system according to an embodiment of the present disclosure may cope with a change in a raw material flow rate that occurs during a production cycle by including the mixed gas supply line to supply the mixed gas to each of the two or more catalyst beds. For example, the ammonia synthesis system may be operated by feeding the mixed gas through the mixed gas supply line 60 disposed at the top for the gas to first pass through the upper catalyst bed 20 disposed at the top when the flow rate of a raw material fed into the ammonia synthesis system is high, and operated by feeding the gas through the mixed gas supply line 61 disposed at the bottom for the gas to pass through the lower catalyst bed 21 disposed at the bottom rather than the upper catalyst bed 20 disposed at the top when the flow rate of the raw material feed is low. Here, the backflow of the mixed gas to the upper catalyst bed 20 may be prevented by the backflow prevention plate 30 when the mixed gas is fed through the mixed gas supply line 61 disposed at the bottom for the gas to pass through the lower catalyst bed 21 disposed at the bottom.

As shown in FIG. 2, the ammonia synthesis system including the three catalyst beds according to another embodiment of the present disclosure may include the upper catalyst bed 20, the middle catalyst bed 21, and the lower catalyst bed 22; the upper distribution plate 30, the middle distribution plate 31, and the lower distribution plate 32, each disposed upstream from the catalyst beds; the backflow prevention plate 40 or 41 preventing the backflow of mixed gas; the distribution device 50, 51, or 52 distributing the mixed gas to the distribution plate 30, 31, or 32; and the mixed gas supply lines 60, 61, and 62 arranged to supply the mixed gas to the distribution devices 50, 51, and 52, wherein the distribution plate 30, 31, or 32 has the plurality of openings 301, 311, and 321 formed independently of each other, and wherein the opening ratio of the upper distribution plate 30 is greater than the opening ratio of the middle distribution plate 31, and the opening ratio of the middle distribution plate 31 is greater than the opening ratio of the lower distribution plate 32. The opening ratio is the percentage of the total area of the openings to the total area of each distribution plate.

The ammonia synthesis system according to an embodiment of the present disclosure may cope with the change in the flow rate that occurs during the production cycle by including the mixed gas supply line to supply the mixed gas to each of the three or more catalyst beds. For example, the ammonia synthesis system may be operated by feeding the gas through the mixed gas supply line 60 disposed at the top for the gas to first pass through the upper catalyst bed 20 disposed at the top when the flow rate of the raw material feed is high, and operated by feeding the gas through the mixed gas supply line 62 disposed at the bottom for the gas to pass through the lower catalyst bed 22 disposed at the bottom rather than the upper catalyst bed 20 disposed at the top when the flow rate of the raw material feed is low. Here, the backflow of the mixed gas to the middle part catalyst bed 21 may be prevented by the backflow prevention plate 31 when the mixed gas is fed through the mixed gas supply line 62 disposed at the bottom for the gas to pass through the lower catalyst bed 22 disposed at the bottom.

In an embodiment, the flow rate that may be changed during the production cycle may be classified into three categories for convenience. As described above, the flow rate may be classified into cases of a low flow rate, a medium flow rate, and a high flow rate. However, the change in the flow rate may be easily regulated by the common sense or judgment of those skilled in the art. The low flow rate case indicates a case where the flow rate of the mixed gas feed flow results in an ammonia produced is less than half (50%) of an annual average production flow rate (100%), the medium flow rate case indicates a case where the flow rate is half (50%) or more and less than twice (200%) of the annual average production flow rate (100%), and the high flow rate case indicates a case where the flow rate is more than twice (200%) of the annual average production flow rate (100%), but the embodiments are not limited thereto.

In the low flow rate case as described above, there is no need to maintain a temperature of the entire reactor 10 because the ammonia synthesis system may be operated by feeding the mixed gas through the mixed gas supply line 61 or 62 disposed at the bottom to pass through the catalyst bed 21 or 22 disposed at the bottom. Therefore, energy may be saved by optimizing an amount of energy required by the system as needed during its operation.

In addition, the ammonia synthesis system may increase the catalyst replacement cycle by using each catalyst bed more uniformly during its operation. In general, when a reaction fluid (e.g., a raw material feed like a hydrogen and nitrogen feed to the ammonia synthesis reactor) has a low flow rate, the distribution performance at the top of each of the catalyst beds may be reduced, which in turn may cause a difference in reaction performance between the various sections of the catalyst bed (even if disposed at the same height) as well as between the various catalyst beds (positioned at different heights within the reactor) such as, for example, between an upper catalyst bed and a lower catalyst bed. The replacement cycle may become shorter as the reaction performance is reduced due to the lower distribution performance caused by the reduced flow rate. Importantly, in the ammonia synthesis system according to the present disclosure, the mixed gas is supplied to pass through only one catalyst bed when the flow rate of the raw material is decreased, and through the plurality of catalyst beds when the flow rate of the raw material is increased. This way the distribution performance of the raw material between the catalyst beds is improved and the catalyst beds may be used relatively more uniformly, which improves the reaction performance of the catalyst beds, and increases the catalyst replacement cycle.

In addition, the ammonia synthesis system according to an embodiment of the present disclosure may include microwave heating devices 70, 71, and 72 for reducing or preventing a temperature deviation between a central part and outer parts of the catalyst beds 20, 21, and 22, respectively at the beginning of their respective operations, thereby improving the overall ammonia synthesis yield. For example, each of the microwave heating devices may reduce or prevent temperature deviation between a central and outer parts of a corresponding catalyst bed so that the catalyst bed temperature may become uniform at the beginning of the catalyst bed operation by emitting microwaves to the catalyst bed to preheat the catalyst bed right before or at the beginning of the catalyst bed operation. The microwave heating device may improve the ammonia synthesis yield at the beginning of the operation by preheating the catalyst bed that is not sufficiently preheated at the beginning of the operation.

For example, when the raw material feed has the low flow rate, the ammonia synthesis system may be operated in a bypass operational mode wherein the raw material passes through the catalyst beds 21 or 22 disposed at the middle, lower or bottom part of the reactor 10 rather than the top catalyst bed 20 disposed at the top of the reactor 10. Here, the mixed gas raw material feed may not be fed into the top catalyst bed 20 disposed at the top of the reactor 10, and a temperature of the top catalyst bed 20 may thus be decreased over time. As a result, when the top catalyst bed 20 is used again after this decrease, ammonia synthesis efficiency may be lower because the temperature of the top catalyst bed 20 has decreased. The embodiments of the present disclosure address this issue by preheating the top catalyst bed 20 with microwaves emitted by the corresponding microwave heating device 70 to ensure the top catalyst bed 20 has uniform temperature at the beginning of its reintroduction into the ammonia synthesis operation after it was taken off-line. This way, the embodiments of the present disclosure achieve excellent ammonia synthesis efficiency even when the catalyst bed is used again for the operation after it was taken off-line for a short or long period of time.

One or more, two or more, three or more, four or more, five or more, six or more, seven or more, or eight or more microwave heating devices may be installed on each catalyst bed, and the number of microwave heating devices is not limited thereto. The number of the microwave heating devices may be increased based on a size of the reactor 10. Generally, the larger the reactor and the catalyst beds the larger also is the number of the microwave heating devices that may be used for each catalyst bed. Also, an installation location of the microwave heating devices may be adjusted for efficient microwave emission.

The ammonia synthesis system may further include microwave guides 701, 711, and 721. Each microwave guide may enable the microwaves emitted by the microwave heating device to reach a catalyst bed more efficiently. The shape or installation location of the guide may be changed based on a microwave waveform.

In an embodiment according to the present disclosure, the number of catalyst beds may be two or more, three or more, four or more, five or more, six or more, seven or more, eight or more, nine or more, ten or more, twenty or fewer, ten or fewer, eight or fewer, seven or fewer, six or fewer, five or fewer, four or fewer, three or fewer, two or fewer, or a value between these values. The number of catalyst beds, the number of distribution plates, and/or the number of distribution devices may be the same.

In an embodiment according to the present disclosure, the number of distribution plates may be two or more, three or more, four or more, five or more, six or more, seven or more, eight or more, nine or more, ten or more, twenty or fewer, ten or fewer, nine or fewer, eight or fewer, seven or fewer, six or fewer, five or fewer, four or fewer, three or fewer, or a value between these values. The number of distribution plates and/or the number of the distribution devices may be the same.

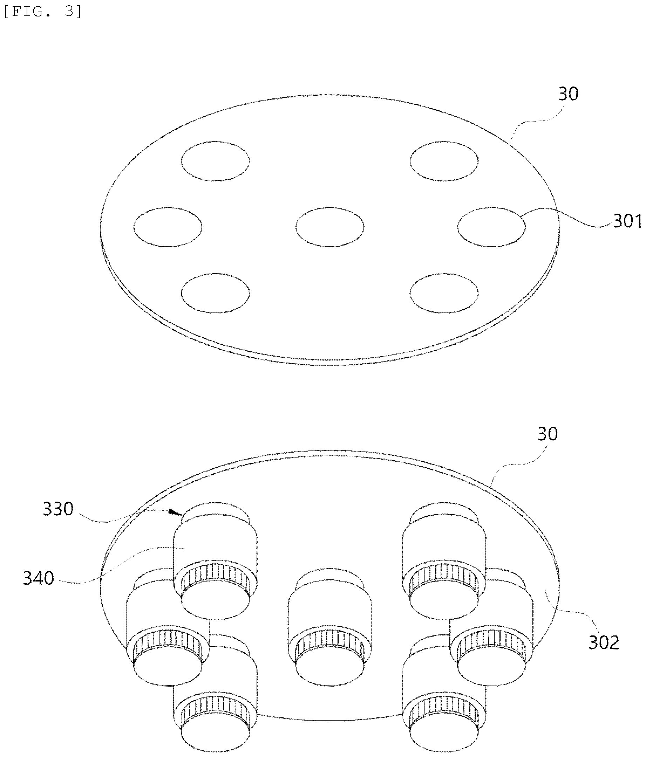

In an embodiment, as shown in FIGS. 1 and 3, the distribution plate may include the upper distribution plate 30 and the lower distribution plate 31, which are distinguished from each other based on their arrangement height, or based on their longitudinal position. The upper distribution plate and the lower distribution plate may have the plurality of openings 301 and 311 formed independently of each other. The percentage of the total area of the openings to the total area of each distribution plate is referred to as the opening ratio. The upper distribution plate and the lower distribution plate may have different opening ratios. For example, an opening ratio Aₜ of the upper distribution plate and an opening ratio A_{b} of the lower distribution plate may satisfy the relationship Aₜ > A_{b}.

In another embodiment, as shown in FIGS. 2 and 3, the distribution plate may include the upper distribution plate 30, the middle distribution plate 31, and the lower distribution plate 32, which are positioned at different heights within the reactor 10. The upper distribution plate, the middle distribution plate, and the lower distribution plate may each have a plurality of openings 301, 311, and 321, respectively, formed independently from each other. The percentage of the total area of the openings to the total area of each distribution plate is referred to as the opening ratio of the distribution plate. The upper distribution plate 30, the middle distribution plate 31, and the lower distribution plate 32 may have different opening ratios. For example, the opening ratio Aₜ of the upper distribution plate, and an opening ratio Aₘ of the middle distribution plate, and the opening ratio A_{b} of the lower distribution plate may satisfy the relationship Aₜ > Aₘ > A_{b}.

In the ammonia synthesis system according to an embodiment of the present disclosure, the distribution plates 30, 31, and 32 may have the opening ratio sequentially decreased toward the lower part based on the arrangement height, or based on their longitudinal position, thereby coping with the change in the flow rate occurring during the production cycle. If the number of distribution plates is increased to more than two or three, the opening ratios may be decreased sequentially toward the lower part based on the arrangement heights of the distribution plates.

Referring to Fig. 3, the top distribution plate of the distribution plates is referred to as the upper distribution plate. The upper distribution plate 30 may have the plurality of upper distribution plate openings 301. The percentage of the total area of the upper distribution plate openings 301 to the total area of the upper distribution plate 30 is referred to as the upper distribution plate opening ratio Aₜ. The opening ratio Aₜ of the upper distribution plate may be more than 40%, 45 to 60%, or 50 to 60%.

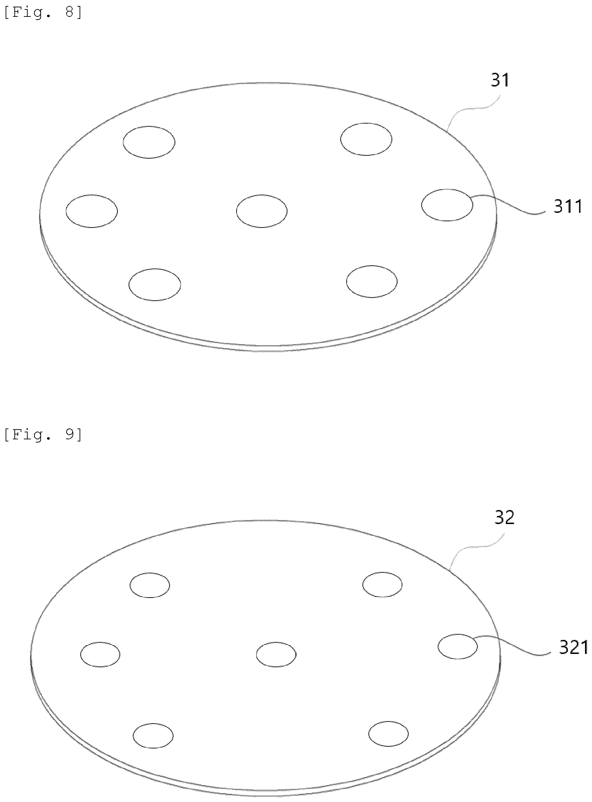

Referring to Fig. 9, the bottom distribution plate of the distribution plates is referred to as the lower distribution plate. The lower distribution plate 32 may have the plurality of lower distribution plate openings 321. The percentage of the total area of the lower distribution plate openings 321 to the total area of the upper distribution plate 32 may be referred to as the lower distribution plate opening ratio A_{b}, and the opening ratio A_{b} of the lower distribution plate may be less than 20%, 5 to 20%, or 10 to 20%.

As described with reference to FIG. 2 and Fig. 8, when three distribution plates are provided, and the middle distribution plate among the distribution plates may be referred to as the middle distribution plate 31, the middle distribution plate 31 may have the plurality of middle distribution plate openings 311. The percentage of the total area of the middle distribution plate openings 311 to the total area of the middle distribution plate 31 may be referred to as the middle distribution plate opening ratio Aₘ, and the opening ratio Aₘ of the middle distribution plate may be 20 to 40%, 25 to 35%, or 30 to 35%.

In addition, a ratio of the middle distribution plate opening ratio Aₘ to the upper distribution plate opening ratio Aₜ may be less than 1, 0.3 to 0.8, or 0.4 to 0.7.

In addition, a ratio of the lower distribution plate opening ratio A_{b} to the upper distribution plate opening ratio Aₜ may be less than 1, 0.1 to 0.5, or 0.2 to 0.4.

In addition, a ratio of the lower distribution plate opening ratio A_{b} to the middle distribution plate opening ratio Aₘ may be less than 1, 0.1 to 0.8, or 0.4 to 0.7.

In the ammonia synthesis system according to an embodiment of the present disclosure, the distribution plate openings 301, 311, and 321 may have their opening diameters decreased sequentially toward the lower part based on their arrangement heights, thereby coping with the change in the flow rate occurring during the production cycle. If the number of the distribution plates is increased to more than two or three, the opening diameters may be decreased sequentially toward the lower part based on the arrangement heights of the distribution plates. The openings may assist the mixed gas to flow easily from the upper part to the lower part by having their diameter sizes becoming sequentially smaller toward the lower part. In addition, the opening diameters whose sizes are sequentially decreased may improve the uniform flow rate distribution before the catalyst bed when the mixed gas has the low flow rate, or facilitate the gas flow from the upper part to the lower catalyst bed when the mixed gas has the high flow rate to thus improve raw material distribution performance between the catalyst beds, thereby improving the reaction performance of the catalyst bed.

According to an embodiment, when two catalyst beds and two distribution plates are provided, the upper distribution plate openings 301 and the lower distribution plate openings 311 may have the same or different diameters. For example, a diameter lₜ of the upper distribution plate opening 301 and a diameter l_{b} of the lower distribution plate opening 311 may satisfy the relationship lₜ ≥ l_{b} or lₜ > l_{b}.

According to another embodiment, when three catalyst beds and three distribution plates are provided, the upper distribution plate opening 301, the middle distribution plate opening 311, and the lower distribution plate opening 321 may have the same or different diameters. For example, the diameter lₜ of the upper distribution plate opening 301, the diameter lₘ of the middle distribution plate opening 311, and the diameter l_{b} of the lower distribution plate opening 321 may satisfy the relationship lₜ ≥ lₘ ≥ l_{b} or lₜ > lₘ > l_{b}.

The ammonia synthesis system according to an embodiment of the present disclosure may cope with the change in the flow rate of the raw material, such as hydrogen, that occurs during the production cycle. In detail, depending upon whether the raw material feed may have a low flow rate, an average flow rate, or a high flow rate, the mixed gas supply line and the distribution device in operation may be changed, thus also changing the number of catalyst beds and the number of the distribution plates through which the mixed gas passes.

As shown in FIG. 1, when the raw material has the high flow rate according to the definition above and the system has the two catalyst beds, the ammonia synthesis system according to an embodiment may be operated by feeding the mixed gas through the mixed gas supply line 60 disposed at the top and using both the upper distribution plate 30 and the lower distribution plate 31. In detail, the mixed gas may first pass through the upper catalyst bed 20 from the upper distribution plate 30 disposed at the top, and then sequentially pass through the lower distribution plate 31 to reach the lower catalyst bed 21 disposed at the bottom. In this way, the mixed gas may be distributed uniformly while simultaneously passing through all catalyst beds, thereby improving the distribution performance of the mixed gas before the catalyst bed, and the mixed gas may be allowed to pass through the two or more catalyst beds, thereby significantly improving the reaction performance of the catalyst bed. Accordingly, the ammonia synthesis system according to an embodiment of the present disclosure may effectively increase the catalyst replacement cycle by uniformly using each catalyst bed during the operation.

The ammonia synthesis system according to an embodiment of the present disclosure does not need to maintain the temperature of the entire reactor because the system may be operated in the low flow rate (according to the above definition) case by feeding the mixed gas through the mixed gas supply line disposed at the bottom for the mixed gas to pass through only the lower catalyst bed disposed at the bottom. Therefore, energy may be saved by optimizing the amount of energy required by the system as needed during its operation.

As shown in FIG. 1, when the two catalyst beds 20, 21 are provided, the ammonia synthesis system according to an embodiment may be operated in the low flow rate case (according to the above definition) by feeding the mixed gas through the mixed gas supply line 61, which is disposed at the bottom, and using only the lower distribution plate 31, which has the smallest opening ratio, without using another distribution plate. In detail, the mixed gas may pass through only the lower distribution plate 31 disposed at the bottom of the distribution plates and reach the lower catalyst bed 21.

As shown in FIG. 2, when three catalyst beds 20, 21, 22 are provided, the ammonia synthesis system according to an embodiment may be operated in the low flow rate case (according to the above definition) by feeding the mixed gas through the lower mixed gas supply line 62, which is disposed at the lowermost part, and using only the lower distribution plate 32, which has the smallest opening ratio, without using another distribution plate. In detail, the mixed gas may pass through only the lower distribution plate 32 disposed at the lowermost part of the distribution plates and reach the lower catalyst bed 22.

As shown in FIG. 2, the ammonia synthesis system according to another embodiment of the present disclosure may be operated in the average flow rate by feeding the mixed gas through the middle mixed gas supply line 61 disposed in the middle, and using only the middle distribution plate 31 and the lower distribution plate 32 without using the upper distribution plate 50. In detail, the mixed gas may first pass through the middle distribution plate 31 disposed in the middle, sequentially pass through the middle part catalyst bed 21, and then the lower distribution plate 32 to reach the lower catalyst bed 22 disposed at the lowermost part.

In an embodiment according to the present disclosure, the mixed gas may include at least one selected from the group consisting of hydrogen and nitrogen.

Hydrogen may be produced by a device powered by renewable energy. For example, hydrogen may be produced by a water electrolyzer powered using renewable energy, such as solar or wind renewable energy.

Renewable energy may include at least one selected from the group consisting of solar energy, photovoltaic energy, bioenergy, wind energy, hydroelectric energy, geothermal energy, ocean energy, and waste energy. Renewable energy shows temporal variability. For example, solar energy is unable to be used at night. Therefore, when hydrogen is produced using the device powered by renewable energy, the ammonia synthesis system is unable to be always operated at a constant flow rate. That is, there is a need for the ammonia synthesis system which may cope with the change in the flow rate that occurs during the production cycle due to the temporal variability of renewable energy.

In addition, the mixed gas supplied through the mixed gas supply line 60, 61, or 62 may have a low temperature. Therefore, the mixed gas supplied from the mixed gas supply line 60, 61, or 62 may function as cooling mixed gas, and may also function as a way of cooling the mixed gas flowing in the ammonia synthesis system. For example, the mixed gas having the low temperature may be used as the cooling mechanism to cool the mixed gas fed into the catalyst bed.

The ammonia synthesis system according to an embodiment of the present disclosure may further include a plurality of mixed gas flow pipes 330 which are fixed to a lower surface 302 of the distribution plate 30, 31, or 32 and through which the mixed gas flows. The ammonia synthesis system may further include the mixed gas flow pipe, thereby maintaining the uniform flow rate distribution before the catalyst bed included in the ammonia synthesis reactor even when the flow rate of the raw material feed such as hydrogen is reduced. FIG. 3 shows a schematic view of the upper distribution plate among the distribution plates. This schematic view is not limited to the upper distribution plate, and may also represent the middle distribution plate and/or the lower distribution plate.

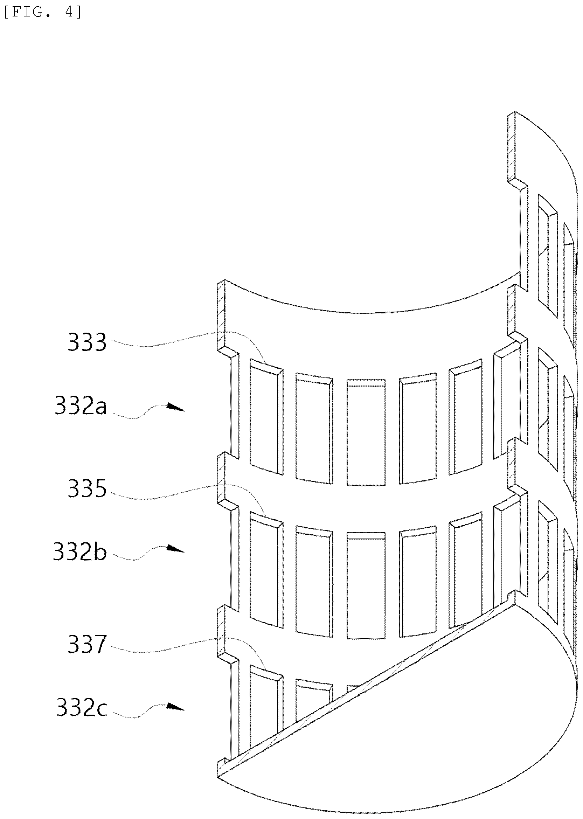

Referring to FIGS. 3 and 4, the mixed gas flow pipe 330 may have a bottom surface and a side surface 332 connecting the bottom surface with the distribution plate. The side surface 332 (332a, 332b, and 332c) may be a surface that is located at the side of the the mixed gas flow pipe (330) and impermeable to the mixed gas.

A plurality of upper apertures 333 may be formed in a side surface of an upper part 332a of the mixed gas flow pipe 330 spaced apart from each other along a circumference of the pipe 330, a plurality of middle apertures 335 may be formed in a side surface of a middle part 332b of the mixed gas flow pipe 330 spaced apart from each other along the circumference, and a plurality of lower apertures 337 may be formed in a side surface of a lower part 332c of the mixed gas flow pipe 330 spaced apart from each other along the circumference. A flow of the mixed gas may be formed through the upper aperture 333, the middle aperture 335, and the lower aperture 337. The mixed gas flow pipe 330 may include a side cover 340 surrounding at least some regions of the side surface of the mixed gas flow pipe 330 to provide a space for the fluid flowing out of the side surface of the mixed gas flow pipe 330 after passing through the upper aperture 333 to be guided toward the middle aperture 335. The side cover 340 may surround at least one selected from the group consisting of the upper and middle parts of the side surface of the mixed gas flow pipe 330.

The side cover 340 may cause the fluid flowing out of the side surface of the mixed gas flow pipe 330 after passing through the upper aperture 333 to be guided toward the middle aperture 335. This configuration may form a flow in which the fluid is moved to the outside of the side surface of the mixed gas flow pipe 330 and then moved back to the inside of the side surface. Through the flow formed in this way, the fluids may be more smoothly mixed with each other.

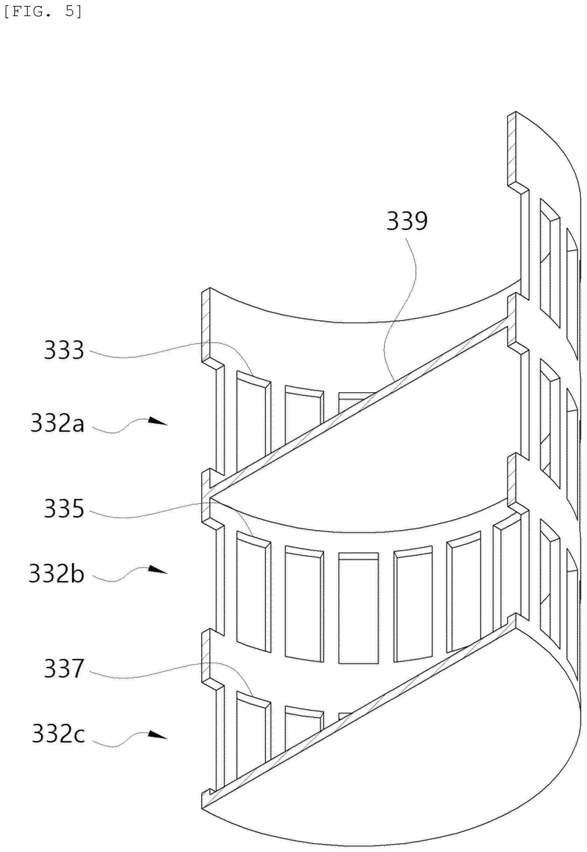

Referring to FIG. 5, the mixed gas flow pipe 330 may further include a separator plate 339 dividing the upper and middle parts of the mixed gas flow pipe 330 from each other. The separator plate 339 may completely separate the upper and middle parts of the mixed gas flow pipe 330 from each other to prevent the movement of the fluid. Therefore, the fluid flowing into the upper part of the mixed gas flow pipe 330 may flow out through the upper aperture 333 into the space between the mixed gas flow pipe 330 and the side cover 340 rather than descending directly to the middle part, by the separator plate 339. The fluid in the space may then flow into the mixed gas flow pipe through the middle aperture 335, descend downwards, and flow out of the mixed gas flow pipe 330 through the lower aperture 337. As described above, the fluid may form the flow in which the fluid flows out of the mixed gas flow pipe 330, flows back into the inside of the pipe, and flows out of the pipe again, thereby mixing the fluids more smoothly, and maintaining the uniform flow rate distribution before the catalyst bed.

In an embodiment according to the present disclosure, the mixed gas supply line 60, 61, or 62 and the distribution device 50, 51, or 52 may be disposed upstream from each of the distribution plate 30, 31, or 32. In detail, as shown in FIG. 1, the upper mixed gas supply line 60 and the upper distribution device 50 may be disposed upstream from the upper distribution plate 30, and the lower mixed gas supply line 61 and the upper distribution device 51 may be disposed downstream from the upper distribution plate 30 and upstream from the lower distribution plate 31, that is, between the upper distribution plate 30 and the lower distribution plate 31. In addition, as shown in FIG. 2, the upper mixed gas supply line 60 and the upper distribution device 50 may be disposed upstream from the upper distribution plate 30; the middle mixed gas supply line 61 and the middle distribution device 51 may be disposed downstream from the upper distribution plate 30 and upstream from the middle distribution plate 31, that is, between the upper distribution plate 30 and the middle distribution plate 31; and the lower mixed gas supply line 62 and the lower part distribution device 52 may be disposed downstream from the middle distribution plate 31 and upstream from the lower distribution plate 32, that is, between the middle distribution plate 31 and the lower distribution plate 32.

In an embodiment according to the present disclosure, each of the mixed gas supply lines 60, 61, and 62 may include a flow regulating device 64, 65, 66 respectively. The flow regulating device 64, 65, 66 may enable the flow rate of the mixed gas to be controlled independently in each of the mixed gas supply lines 60, 61, 62. In detail, the flow regulating device may independently regulate the flow rate of the mixed gas flowing through each of the mixed gas supply lines for the flow rate of the mixed gas entering the distribution device to be maintained within a desired flow rate range. The flow regulating device may be a flow regulating valve.

In an embodiment according to the present disclosure, each of the mixed gas supply lines 60, 61, and 62 may branch from one main supply line. Alternatively, each of the mixed gas supply lines 60, 61, and 62 may receive at least one gas selected from the group consisting of nitrogen and hydrogen from each of individual supply lines.

In an embodiment according to the present disclosure, each of the backflow prevention plates 40 and 41 may include a plurality of openings 402, and each of the plurality of openings 402 included in each of the backflow prevention plates 40 and 41 may have a backflow prevention cap 403 selectively opened based on a flow direction of the gas. The ammonia synthesis system according to the present disclosure may include the backflow prevention plate 40 or 41 including the backflow prevention cap 403, thereby preventing the backflow of the mixed gas to the top even when the mixed gas is fed through the mixed gas supply line disposed at the bottom or the middle for the gas to pass through the catalyst bed disposed at the bottom or the middle. In addition, the system may be implemented to prevent the backflow of the mixed gas as described above to thus save the energy by optimizing the amount of energy required by the system as needed during its operation, and increase the catalyst replacement cycle by using each catalyst bed uniformly.

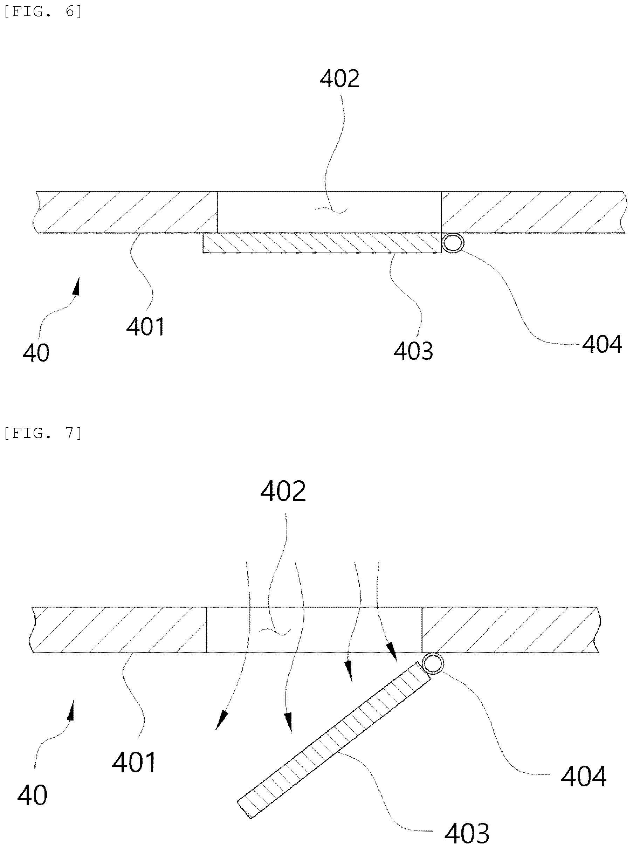

Referring to FIGS. 6 and 7, the backflow prevention cap 403 may be coupled to a hinge spring 404 disposed at a position on each circumference part of the plurality of openings 402 formed in each of the backflow prevention plates 40 and 41. FIG. 7 shows the backflow prevention cap 403, which is coupled to the hinge spring 404, in an open position state. When the mixed gas flows from the upstream to downstream of the backflow prevention plate 40 or 41, the backflow prevention cap 403 may be maintained in the opened position, and the mixed gas may thus flow normally. FIG. 6 shows a state where the backflow prevention cap 403, which is coupled to the hinge spring 404, is closed. When the mixed gas is to flow from the downstream to upstream of the backflow prevention plate 40 or 41, the backflow prevention cap 403 may be closed by the flow of the mixed gas flowing from the downstream to the upstream. By this principle, the backflow prevention plate 40 or 41 according to the present disclosure may prevent the backflow of the mixed gas.

In an embodiment according to the present disclosure, the hinge spring 404 may apply an elastic force in a direction in which the backflow prevention cap 403 approaches the distribution plate.

In an embodiment according to the present disclosure, the distribution device 50, 51, or 52 may have a disk shape. In another embodiment according to the present disclosure, the distribution device 50, 51, or 52 may have a toroidal shape. However, the embodiment may not be limited to a distribution device having only these shapes. Generally, any suitable distribution device may be used including any suitable conventional gas distribution device.

The ammonia synthesis system according to an embodiment of the present disclosure may further include the microwave heating device 70, 71, and 72 for emitting microwaves to the catalyst beds 20, 21, and 22 respectively. The ammonia synthesis system may include the microwave heating devices 70, 71, or 72 to thus reduce or prevent temperature deviation between a central and outer parts of the catalyst beds 20, 21, or 22 respectively. Hence, the temperature can be uniform across each entire catalyst bed at the beginning of its operation, thereby improving the ammonia synthesis yield. The microwave heating devices may reduce or prevent temperature deviation between a central and outer parts of their respective catalyst bed by emitting microwaves to the catalyst bed right before or at the beginning of the operation. In addition, the microwave heating device may improve the ammonia synthesis yield at the beginning of the operation by preheating the catalyst bed that is not sufficiently preheated at the beginning of the operation.

One or more, two or more, three or more, four or more, five or more, or eight or more microwave heating devices may be installed on each catalyst bed, and the number of microwave heating devices is not limited thereto. The number of the microwave heating devices may be increased based on the size of the reactor, and the installation location of the microwave heating device may be adjusted for the efficient microwave emission.

The ammonia synthesis system may further include the microwave guide. The microwave guide may enable the microwaves emitted by the microwave heating device to reach the catalyst bed more efficiently. The shape or installation location of the guide may be changed based on the microwave waveform.

In a method for synthesizing ammonia with an ammonia synthesis system according to an embodiment of the present disclosure, ammonia may be synthesized at 1 to 500 bar or 10 to 300 bar.

In addition, ammonia may be synthesized at 100 to 800°C or 200 to 700°C.

The ammonia synthesis system according to an embodiment of the present disclosure may further include a heat exchanger disposed downstream from each of the two or more catalyst beds to remove heat from an effluent of the catalyst bed. The heat exchanger may surround the catalyst bed or its surroundings. The ammonia synthesis system according to the present disclosure may include an additional heat removal ways other than the supply of the cooling mixed gas by further including the heat exchanger. This configuration may enable the flexible operation of the ammonia synthesis system.

As set forth above, the ammonia synthesis system according to an embodiment of the present disclosure may cope with the change in the flow rate that occurs during the production cycle.

The ammonia synthesis system according to another embodiment of the present disclosure may improve the reaction performance of the catalyst bed by maintaining the uniform flow rate distribution before the catalyst bed included in the ammonia synthesis reactor even when the flow rate of the raw material, such as hydrogen, fed into the ammonia synthesis system is decreased, and supplying the mixed gas for the gas to pass through only the minimum catalyst bed.

The ammonia synthesis system according to another embodiment of the present disclosure may improve the reaction performance of the catalyst bed by supplying the mixed gas to pass through the two or more catalyst beds even when the flow rate of the raw material, such as hydrogen, fed into the ammonia synthesis system is increased.

The ammonia synthesis system according to still another embodiment of the present disclosure may improve the ammonia synthesis yield by reducing or preventing temperature deviation between the central and outer parts of a catalyst bed at the beginning of its operation.

The ammonia synthesis system according to an embodiment of the present disclosure may improve the ammonia synthesis yield at the beginning of its operation by preheating a catalyst bed as may be needed at the beginning of its operation.

The ammonia synthesis system according to an embodiment of the present disclosure may save energy by optimizing the amount of energy required by the system during its operation.

The ammonia synthesis system according to an embodiment of the present disclosure may increase the catalyst replacement cycle by uniformly using each catalyst bed during the operation and improving the reaction performance.

The ammonia synthesis system according to an embodiment of the present disclosure may synthesize ammonia in an eco-friendly manner because it may use raw material produced via a process utilizing renewable energy and may also reduce the overall energy consumption of the process.

It is noted that the described embodiments are only provided as examples embodying the principles of the present disclosure, and that many other variations of the described embodiments may be envisioned by those with ordinary skill in the art without departing from the scope of the present disclosure. Furthermore, the embodiments may be combined to form additional embodiments.

## Claims

1. An ammonia synthesis system comprising:
an ammonia synthesis reactor (10);
two or more catalyst beds (20-22) included in the ammonia synthesis reactor (10);
a plurality of distribution plates (30, 31) with each distribution plate (30-32) disposed upstream from the catalyst beds (20-22);
a plurality of backflow prevention plates (40, 41) disposed downstream from each of the catalyst beds (20-22), optionally except for the catalyst bed disposed at the lowest of the catalyst beds (21), for preventing a backflow of mixed gas;
a plurality of distribution devices (50, 51), each distribution device (50-52) disposed upstream from each of the distribution plates (30, 31, 32) for distributing the mixed gas to the distribution plate (30-32); and
mixed gas supply lines (60-62) arranged to supply the mixed gas to the respective distribution devices (50, 51),
wherein the respective distribution plate (30-32) has a plurality of openings (301, 311, 321) formed independently of each other, and
wherein when a percentage of a total area of the openings (301, 311, 321) to a total area of each distribution plate (30, 31, 32) is referred to as an opening ratio, and
wherein an opening ratio of the distribution plates (30, 31, 32) is decreased toward a lower part.

2. The system according to claim 1, wherein an opening ratio Aₜ of the upper distribution plate (30) is more than 40%.

3. The system according to claim 1, wherein an opening ratio A_{b} of a lower distribution plate (32) is less than 20%.

4. The system according to claim 1, wherein when three distribution plates (30, 31, 32) are provided, an opening ratio Aₘ of a middle distribution plate (31) is 20 to 40%.

5. The system according to one of claims 1 to 4, further comprising a plurality of mixed gas flow pipes (330) which are fixed to a lower surface of at least one of the distribution plates (30, 31, 32) and through which the mixed gas flows.

6. The system according to claim 5, wherein:
each of the mixed gas flow pipes (330) has a bottom surface and a side surface (332) connecting the bottom surface with the distribution plate (30-32),
a plurality of upper apertures (333) are formed in a side surface (332) of an upper part (332a) of the mixed gas flow pipe (330) spaced apart from each other along a circumference of the mixed gas flow pipe (330),
a plurality of middle apertures (335) are formed in a side surface (332) of a middle part (332b) of the mixed gas flow pipe (330) spaced apart from each other along the circumference of the mixed gas flow pipe (330),
a plurality of lower apertures (337) are formed in a side surface (332) of a lower part of the mixed gas flow pipe (330) spaced apart from each other along the circumference, and
wherein optionally the mixed gas flow pipe (330) includes a side cover (340) surrounding at least some regions of the side surface (332) of the mixed gas flow pipe (330) to provide a space for a fluid flowing out of the side surface (332) of the mixed gas flow pipe (330) after passing through the upper apertures (333) to be guided toward the middle apertures (335) and/or optionally wherein the mixed gas flow pipe (330) further includes a separator plate (339) dividing the upper (332a) and middle parts (332b) of the mixed gas flow pipe (330) from each other.

7. The system according to one of claims 1 to 6, further comprising a microwave heating device (70, 71, 72) for emitting microwaves to the catalyst bed (20-22).

8. The system according to one of claims 1 to 7, wherein each of the mixed gas supply lines (60-62) includes a flow regulating device (64-66).

9. The system according to one of claims 1 to 8, wherein each of the backflow prevention plates (40, 41) includes a plurality of openings (402), and
wherein each of the plurality of openings (402) included in each of the backflow prevention plates (40, 41) has a backflow prevention cap (403) selectively opened based on a flow direction of the gas.

10. The system according to claim 9, wherein the backflow prevention cap (403) is coupled to a hinge spring (404) disposed at a position on each circumference part of the plurality of openings (402) formed in each of the backflow prevention plates (40, 41), optionally wherein the hinge spring (404) applies an elastic force in a direction in which the backflow prevention cap (403) approaches the distribution plate (30-32).

11. The system according to one of claims 1 to 10, further comprising a heat exchanger disposed downstream from the catalyst bed (20-22) which is adapted to remove heat from an effluent of the catalyst bed (20-22).

12. The system according to one of claims 1 to 11, wherein the distribution device (50-52) has a disk shape or a toroidal shape.

13. Method for synthesizing ammonia using the ammonia synthesis system according to one of claims 1 to 12.

14. The method for synthesizing ammonia according to claim 13, wherein ammonia is synthesized in the ammonia synthesis system at 10 to 300 bar, and/or
wherein ammonia is synthesized in the ammonia synthesis system at 200 to 700°C.

15. An ammonia synthesis system comprising:
a mixed gas supply line (60-62) providing mixed gas including hydrogen generated from a process using renewable energy to an ammonia synthesis reactor (10);
the ammonia synthesis reactor (10);
a first and a second catalyst bed included in the ammonia synthesis reactor (10);
a first distribution plate disposed upstream from the first catalyst bed;
a second distribution plate disposed upstream from the second catalyst bed;
a first backflow prevention plate disposed downstream from the first catalyst bed for preventing a backflow of mixed gas;
a first distribution device disposed upstream from the first distribution plate for distributing a mixed gas feed to the first distribution plate;
a second distribution device disposed upstream from the second distribution plate for distributing a mixed gas flow exiting the first catalyst bed to the second distribution plate;
wherein each distribution plate (30-32) has a plurality of openings (301, 311, 321), and
wherein an opening ratio of the second distribution plate is lower than an opening ratio of the first distribution plate.
